# EUROPÄISCHE PATENTSCHRIFT

(11) **EP 2 062 949 B1**
(45) Veröffentlichungstag und Bekanntmachung des Hinweises auf die Patenterteilung: **28.07.2010**
(21) Anmeldenummer: 08020155.1
(22) Anmeldetag: 19.11.2008
(51) Int. Cl.: C09D 11/10, A22C 13/00, C09D 4/00

(54) **Druckfarbensystem zum Bedrucken von Nahrungsmittelhüllen auf Polyamidbasis, bedruckte Nahrungsmittelhüllen und Verfahren zu ihrer Herstellung**
Printing ink for printing polyamide-based food wrappers, printed food wrappers and method for producing same
Système de couleur d'impression destiné à imprimer des enveloppes d'aliments à base de polyamide, enveloppes d'aliments imprimées et leur procédé de fabrication

(30) Priorität: 22.11.2007 DE 102007056477
(43) Veröffentlichungstag der Anmeldung: 27.05.2009
(73) Patentinhaber: Kalle GmbH, 65203 Wiesbaden (DE); Printec GmbH, 99894 Ernstroda (DE)
(72) Erfinder: Faltermeier, Ralf, 65321 Heidenrod (DE); Gauger, Olaf, 55299 Nackenheim (DE); Seelgen, Hans-Werner, 65510 Idstein (DE); Morast, Alexander, 49584 Fürstenau (DE); Seng, Hans-Peter, Dr., 73079 Süssen (DE)
(74) Vertreter: Plate, Jürgen

(56) Entgegenhaltungen:
- WO-A-98/11168
- US-A- 4 317 894
- US-A1- 2007 076 069

## Beschreibung

Die Erfindung betrifft ein Druckfarbensystem zum Bedrucken von Folien auf Polyamidbasis, damit bedruckte ein- oder mehrschichtige Folien zur Verwendung als Nahrungsmittelhüllen, insbesondere als künstliche Wursthüllen, und Verfahren zu ihrer Herstellung.

Bedruckte Nahrungsmittelhüllen finden in der Lebensmittelindustrie breite Anwendung, z.B. als Verpackungen für Wurst, Käse oder Fertiggerichte. Ein erheblicher Teil der verwendeten Nahrungsmittelhüllen basiert auf ein- oder mehrschichtigen Trägerhüllen aus thermoplastischen Polymeren, deren Oberfläche mehrfarbig bedruckt wird. Für die Verpackung vieler Wurstsorten werden thermisch schrumpfbare Nahrungsmittelhüllen benötigt.

Bedruckte Wursthüllen lassen sich nach verschiedenen, gebräuchlichen Druckverfahren herstellen. In der Praxis haben sich zwei Verfahren durchgesetzt, der Flexodruck und der Kupfertiefdruck. Wursthüllen sind generell auf der Außenseite bedruckt, da die Hygienevorschriften vieler Länder einen direkten Kontakt der Druckfarbe mit dem Wurstbrät verbieten. Nur bei Wursthüllen aus mehrschichtigen Kunststoffbahnen, die nach der Schlauchbildung mit einer Naht versehen werden, besteht die Möglichkeit, die Bedruckung schützend zwischen zwei Schichten anzuordnen. Dafür wird häufig der Kupfertiefdruck eingesetzt. Die Bedruckung von Wursthüllen muß so ausgeführt sein, daß sich das Druckbild weder beim Lagern und Verarbeiten der Wursthüllen noch beim Vertrieb der fertigen Würste verändert oder negative Nebenerscheinungen auftreten. Dementsprechend müssen folgende Anforderungen von der Bedruckschicht erfüllt werden:
- neutrales Verhalten gegenüber der Trägerhülle,
- neutrales Verhalten gegenüber dem Füllgut (dem Wurstbrät),
- Beständigkeit gegen Fett und Wasser,
- Beständigkeit gegen Salz und Lake,
- Beständigkeit gegen Gewürze und Würzstoffe,
- Temperaturbeständigkeit,
- inert gegen Rauchgase,
- Abriebfestigkeit,
- Alterungsbeständigkeit,
- Lichtbeständigkeit,
- Festigkeit bei Dimensionsänderungen, d.h. Mitgehen des Druckbildes mit der Wursthülle bei Dehn- und Schrumpfvorgängen.

Die dafür eingesetzten Flexodruckfarben sind allgemein Lösungsmittelfarben mit relativ niedrigen Festkörpergehalten, die umso niedriger eingestellt werden, je höher die Druckgeschwindigkeit ist. Sie bestehen aus Farbpigmenten, Bindemitteln, Additiven und Lösungsmittel beziehungsweise Lösemittelgemischen. Für Mehrfarbendrucke durchläuft die zu bedruckende Trägerhülle mehrere Farbstationen, in denen jeweils eine Druckfarbe aufgetragen wird. Bei bestimmten Wursthüllen, zum Beispiel bei eingefärbtem Kunstdarm, werden helle, insbesondere weiße Farbtöne doppelt gedruckt, um eine ausreichende Farbdeckung zu erreichen.

Moderne Druckmaschinen, wie sie heute für das Bedrucken von Kunststoffolien, insbesondere Wursthüllen auf Basis von Kunststoff, eingesetzt werden, sind sogenannte Zentralzylindermaschinen, die mit bis zu 8 Farbwerken ausgerüstet sind. Bei ihnen sind die Farbstationen um einen großen, meistens mit Wasser gekühlten Zylinder angeordnet. Die Trägerhülle wird um den Zentralzylinder herumgeführt und in den Farbstationen unter gleichen Spannungsbedingungen mit den unterschiedlich getönten Farben bedruckt.

Die Druckmaschinen haben folgende Arbeitsweise: Die in einer Abwickelstation von einer Rolle ablaufende Trägerhülle wird über Lenkwalzen geführt und dabei mit sogenannten Seitenkantensteuerungseinrichtungen auf den Walzen positioniert. Danach passiert die Träger eine Corona-Station zwecks Druckvorbehandlung, die bei Trägerhüllen aus natürlichen Rohstoffen (Cellulose, Collagen, Gewebe etc.) nicht in Betrieb sein muss. Von dort kommend wird die Trägerhülle mit Walzen um den Zentralzylinder gelegt und dabei an den Farbstationen vorbeigeführt und bedruckt. Zwischen den Druckwerken befinden sich Trocknereinrichtungen, die die Druckfarbe vor der jeweils nächsten Bedruckung trocknen. Die bedruckte Trägerhülle durchläuft dann einen Trockentunnel, in dem die abschließende Trocknung, überwiegend mit erwärmter Luft und/oder Heizstrahlern, erfolgt. Nach einer Konditionierung und eventuellen Bestäubung mit einem Puder als Abstandshalter wird die fertig bedruckte Trägerhülle wieder aufgewickelt.

Die Farbstationen bestehen aus einer Farbwanne, in der die Druckfarbe bevorratet wird, einer oder mehreren Farbdosierwalzen und einer Klischeewalze, auf der ein lasergraviertes Gummi- oder photopolymeres Kunststoffklischee befestigt ist. Bei großen Druckauflagen kann das Klischee direkt durch Lasergravur der Kunststoffoberfläche des Zylinders hergestellt werden. Solche Druckzylinder werden als Sleevezylinder bezeichnet. Die Farbdosierwalzen können Gummi- oder Kunststoffwalzen oder Rasterwalzen aus Metall mit und ohne Keramikoberfläche und mit oder ohne Rakeleinrichtung sein. Bei hohen Druckgeschwindigkeiten kann die Farbwanne mit der Rakeleinrichtung gekapselt sein. Man spricht dann von Kammerrakeleinrichtungen. Die erhabenen Teilflächen des Klischees auf der Klischeewalze werden durch die Dosierwalze mit Druckfarbe benetzt, die von dort auf die Oberfläche der Trägerhülle übertragen wird. Ist der Farbauftrag vorgenommen, so muß das verwendete Lösemittel durch Trocknung im Luftstrom oder mittels Heizung in dem Trockentunnel entfernt werden. Anschließend wird die bedruckte Trägerhülle aufgewickelt und nach einer eventuell notwendigen Aushärtezeit konfektioniert.

Als Druckfarbe werden verwendet:
- einkomponentige Flexodruckfarben auf Basis von Lösemitteln bzw. Lösemittelmischungen,
- einkomponentige Flexodruckfarben, die strahlenhärtend sind,
- zweikomponentige Flexodruckfarben, sogenannte Reaktionsfarben, die aus den Komponenten Farbe und Härter bestehen

Die einkomponentige Flexodruckfarbe auf Basis von Lösemitteln kann ohne Vorbereitung verdruckt werden, sieht man von einer Einstellung der richtigen Druckviskosität ab. Diese Farben haben ein begrenztes Einsatzgebiet, da sie wegen ihrer geringeren Haftung nicht für jede polymere Trägerhülle geeignet sind.

Die einkomponentige, unter der Einwirkung von Strahlung härtende Flexodruckfarbe wird erst seit kurzem für die Bedruckung von polymeren Trägerhüllen angewendet, wobei annähernd die Qualität des Kupfertiefdrucks erzielt wird. Die Härtung erfolgt beim Druck auf polymere Trägerhüllen mittels UV-Strahlung, die mit Quecksilber-Quarzstrahlern erzeugt wird. Dieses Druckverfahren wird auch als Flexodruck mit UV-härtenden Druckfarben bezeichnet. Prinzipiell gibt es zwei unterschiedlich aufgebaute Sorten von UV-härtenden Druckfarben, solche mit radikalisch härtenden chemischen Reaktionen und andere mit kationischer Härtung. Für Nahrungsmittelhüllen werden bevorzugt kationisch härtende Farben verwendet, da diese in ihrer Zusammensetzung den lebensmittelrechtlichen Vorschriften entsprechen und darüber hinaus bessere Anwendungseigenschaften aufweisen. Die UV-härtenden Druckfarben sind lösemittelfrei aufgebaut und unterliegen damit nicht den Gesetzen und Auflagen für brennbare Flüssigkeiten. Die bedruckten Wursthüllen sind frei von Lösemittelrückständen. Die Farbe läßt sich problemlos und mit hoher Geschwindigkeit verdrucken und erlaubt einen feinen Rasterdruck bis zu 65 Linien pro cm, der dem Tiefdruck ebenbürtig ist. Die UV-härtenden Druckfarben eignen sich auch für den "Rasterdruck im Vierfarbsatz". Durch Über- beziehungsweise Nebeneinander-Druck der Rasterpunkte ergeben sich für das menschliche Auge verschiedene Farben. So kann man zum Beispiel mittels nebeneinander gedruckten gelben und blauen Rasterpunkten einen grünen Farbeindruck erzeugen. Bei der Härtung der Druckfarbe mit UV-Licht wird durch einen in der Druckfarbe enthaltenen Photoinitiator eine Polymerisation ausgelöst, die zur Härtung der Druckfarbe führt. In den entsprechenden Druckmaschinen sind die UV-Licht erzeugenden Quarzstrahler zwischen den Farbstationen angeordnet, so daß kein Trockentunnel mehr benötigt wird.

Bei den zweikomponentigen Flexodruckfarben, die mit Härterzusatz verdruckt werden, müssen die Komponenten direkt vor Druckbeginn in einem bestimmten Verhältnis zusammengemischt und in einer vorgegebenen Zeit verwendet werden, damit die chemische induzierte Vernetzung der Druckfarbe auf der Oberfläche der Trägerhülle stattfindet. Wegen der limitierten Verarbeitungszeit, dem geringen "potlife" und der nicht gegebenen erneuten Verwendung verursacht dieses Farbsystem hohe Druckkosten.

Bei den zweikomponentigen Flexodruckfarben kennt man einige Varianten, die durch unterschiedlich verwendete Lösemittel entstehen, und zwar lösemittelbasierende, alkoholbasierende und wasserbasierende Druckfarben. Durch die lange Reaktionszeit, die in der Regel bei 2 bis 3 Tagen liegt, verzögert sich die Konfektionierung. Die Zumischung von Härter erhöht auf der anderen Seite die Farbhaftung auf der Oberfläche der Wursthülle, so daß damit auch Hüllen, die aus natürlichen Rohstoffen hergestellt werden, wie zum Beispiel Collagen, Cellulose, Gewebe, sicher und gut haftend bedruckt werden können.

In der WO 02/081576 ist eine wäßrige UV-härtende Zusammensetzung für Bedruckungen und Beschichtungen offenbart, die
- Wasser als Lösemittel,
- eine wasserlösliche Komponente mit mindestens einer α,β-ethylenisch ungesättigten, strahlungs-polymerisierbaren Gruppe,
- optional Farbstoffe oder Pigmente und
- optional Photoinitiatoren, die bei UV-Bestrahlung freie Radikale bilden, enthält.

Bevorzugt ist die wasserlösliche Komponente ein wasserlösliches Oligomer mit zwei oder mehr Acrylat-Gruppen. Im weiteren betrifft die WO 02/081576 ein Verfahren, bei dem ein Substrat mit der Zusammensetzung bedruckt oder beschichtet und die Zusammensetzung dann durch UV-Strahlung zu einem Film gehärtet wird. Als Druckverfahren ist u.a. Flexodruck erwähnt. Als Substrat werden Verpackungsmaterialien für Lebensmittel aus verschiedenen thermoplastischen Polymeren, wie Polyamid beschrieben. Der gehärtete Film weist gute Adhäsion auf dem Substrat sowie hohe Abriebfestigkeit auf. Wäßrige Zusammensetzungen benötigen jedoch lange Trocknungszeiten und sind daher für die angestrebten hohen Druckgeschwindigkeiten wenig geeignet.

In der EP 0 741 644 B1 ist ein Verfahren zum flexografischen Bedrucken von Verpackungen für Lebensmittel offenbart, bei dem mehrere Schichten einer UVstrahlungshärtende Druckfarben auf eine durch Wärme schrumpfbare, flexible Bahn aufgebracht und durch Bestrahlung mit ultraviolettem Licht (UV) oder mit Elektronen (electron beam, EB) teilweise, respektive vollständig gehärtet werden. Hierbei werden frisch aufgetragene Druckfarben zwischen den Farbstationen der Flexodruckmaschine mittels UV-Licht teilweise gehärtet; abschließend wird die gesamte Bedruckung unter der Einwirkung von EB vollständig gehärtet. Die Menge an Photoinitiatoren in der strahlungshärtenden Druckfarbe kann unter 10 Gew.% betragen. Das Aufbringen einer Grundierung vor dem Bedrucken ist nicht erwähnt. Es sind auch keine Verpackungen auf Basis von Polyamid oder Copolyamid erwähnt, die sich mit UV-härtbaren Druckfarben nicht gut bedrucken lassen.

In der DE 601 22 503 ist ein Tintensystem in Verbindung mit einem Überdrucklacksystem für die flexografische Bedruckung von thermisch schrumpfbaren polymeren Verpackungshüllen für Lebensmittel beschrieben. Die Bedruckungsseite der Verpackungshüllen kann aus Polyamiden, wie Nylon bestehen. Das mit Elektronenstrahlen oder ultraviolettem Licht (UV) härtbare Überdrucklacksystem enthält
i) Monomere mit niedriger Viskosität (reaktive Verdünnungsmittel),
ii) Oligomere/Präpolymere (z.B. Acrylate) und gegebenfalls
iii) andere Additive, wie unreaktive Weichmacher-Verdünnungsmittel.

Vorzugsweise beruht die Härtung des Überdrucklacksystems auf einem freiradikalischen Mechanismus. Die UV-härtbaren Überdrucklacksysteme enthalten einen oder mehrere Photoinitiatoren. Das Tintensystem kann strahlungshärtbar sein und ein oder mehrere Färbungsmittel (z.B. Pigmente) zusammen mit Monomeren und Oligomeren/Präpolymeren (analog zum Überdrucklacksystem) enthalten. Bevorzugt ist das strahlungshärtbare Tintensystem nahezu frei von Photoinitiatoren. Vor dem Auftrag des Tintensystems kann die Verpackungshülle mit einem Primer behandelt werden. Das Aufbringen und Aushärten eines Überdrucklacks bedeutet jedoch zusätzliche Arbeitsschritte, was das Verfahren insgesamt nachteilig macht.

In der Verpackungsindustrie für Lebensmittel besteht ein Bedarf für ein lösemittelfreies und im wesentlichen UV-härtendes Drucksystem, das keine abschließende Härtung mittels Elektronenstrahl erfordert. Es soll sich insbesondere für den Flexodruck eignen und eine hohe Druckgeschwindigkeit (bis zu 150 m/min oder mehr) zulassen. Insbesondere sollen sich damit Oberflächen bedrucken lassen, die im wesentlichen aus Polyamiden und/oder Copolyamiden bestehen. Das Druckbild soll dabei fest auf dem Untergrund verankert sein und auch bei Einwirkung von Ölen oder Fetten, heißem Wasser oder anderen bei der Herstellung von verpackten Lebensmitteln auftretenden Stoffen nicht verändern.

Die Erfindung hat die Aufgabe, eine bedruckte Folie auf Basis von (Co-)Polyamid, insbesondere eine bedruckte schlauchförmige Nahrungsmittelhülle auf Basis von (Co-)Polyamid, bereitzustellen, die folgende Eigenschaften aufweist:
- starke Haftung auf der Oberfläche der Hülle, auch ohne vorherige CoronaBehandlung der Oberfläche;
- hohe Abrieb- und Kratzfestigkeit;
- Beständigkeit gegenüber mechanischen und thermischen Einwirkungen, denen Lebensmittel, wie z.B. Wurst, bei Abfüllung, Verpackung, Nachbehandlung, Lagerung und Transport ausgesetzt sind;
- geringer Restgeruch;
- keine geschmackliche Beeinträchtigung von Lebensmitteln, die mit der Bedruckung in Berührung kommen;
- weniger als 10 mg/dm² an extrahierbaren Rückständen,
- kein Überdrucklack notwendig;
- keine Verwendung von wasserhaltigen Druckfarben;
- es können hochglänzende oder auch matte bis sehr matte Drucke erzielt werden.

Gelöst wird diese Aufgabe durch ein Druckfarbensystem, das aus einer Grundfarbe und mindestens einer radikalisch härtenden Druckfarbe besteht. Die Grundfarbe umfaßt als wesentliche Komponente eine Verbindung, die zwei verschiedene Arten von reaktiven Gruppen enthält. Eine davon kann eine Bindung mit der (Co-)Polyamid-Oberfläche eingehen, insbesondere durch eine (Poly)Kondensationsreaktion. Die Gruppen der anderen Art sind ethylenisch ungesättigte Gruppen, die eine radikalisch initiierte Polyadditionsreaktion eingehen können. Insbesondere handelt es sich dabei um (Meth)acrylat-Gruppen.

Gegenstand der Erfindung ist demnach ein Druckfarbensystem zum Bedrucken von Folien mit einer druckseitigen Oberfläche auf Basis von (Co-)Polyamid mit einer radikalisch härtenden Grundfarbe und mindestens einer radikalisch UV-härtenden Druckfarbe, wobei die Grundfarbe eine reaktive Verbindung umfaßt, die in ein und demselben Molekül
a) mindestens eine Gruppe enthält, die eine Bindung mit der (Co-)Polyamid-Oberfläche eingehen kann; und
b) mindestens eine ethylenisch ungesättigte Gruppe, die eine radikalisch initiierte Polyadditionsreaktion eingehen kann.

Die reaktive Verbindung ist ein Monomer, Oligomer und/oder Präpolymer. Die Gruppe, die eine Bindung mit der (Co-)Polyamid-Oberfläche eingehen kann, ist eine Isocyanat-Gruppe. Als ethylenisch ungesättigte Gruppe wird vorzugsweise eine (Meth)acrylatgruppe eingesetzt.

Insbesondere umfaßt die Grundfarbe eine Verbindung mit mindestens einer Isocyanat- und mindestens einer (Meth)acrylat-Gruppe. Die Isocyanatgruppen reagieren dabei mit Wasser unter Ausbildung von Urethangruppen. Möglicherweise tritt auch eine Reaktion mit Carboxyl-Endgruppen des (Co-)Polyamids ein und stellt so eine feste Verbindung, insbesondere kovalente Bindung, mit dem (Co-)Polyamid her. Der genaue Reaktionsmechanismus ist jedoch noch nicht aufgeklärt. Die Aushärtung der Grundfarbe durch Umsetzung der beiden verschiedenen Arten von reaktiven Gruppen wird nachfolgend auch als "dual-cure" bezeichnet.

Die radikalisch härtende Grundfarbe kann radikalisch unter der Einwirkung von UV-Strahlen oder Elektronenstrahlen härtende Monomere, Oligomere und/oder Präpolymere mit polymerisierbaren ethylenisch ungesättigten Gruppen umfassen. Sie wirken vorzugsweise als Reaktiv-Verdünner für die Grundfarbe. Besonders geeignet als Reaktiv-Verdünner sind niederviskose Monomere mit radikalisch polymerisierbaren olefinischen Doppelbindungen, bevorzugt Tripropylenglykoldi(meth)acrylat, Dipropylenglykoldi(meth)acrylat, Hexandioldi(meth)acrylat oder Trimethylolpropan-tri(meth)acrylat.

Allgemein können als Monomere folgende Verbindungen verwendet werden: Trimethylolpropantri(meth)acrylat, Hexandioldi(meth)acrylat, 1,3-Butylenglykoldi(meth)acrylat, Diethylenglykoldi(meth)acrylat, 1,6-Hexandioldiacrylat, Neopentylglykoldi(meth)acrylat, Polyethylenglykol-200-di(meth)acrylat, Tetraethylenglykoldiacrylat, Triethylenglykoldiacrylat, Pentaerythrittetra(meth)acrylat, Tripropylenglykoldiacrylat, ethoxyliertes Bisphenol-A-di(meth)acrylat, Propylenglykolmono- oder -dimethacrylat, Trimethylolpropantri(meth)acrylat, Ditrimethylolpropantetraacrylat, Triacrylat von Tris(hydroxyethyl)isocyanurat, Dipentaerythrithydroxypentaacrylat, Pentaerythrittri(meth)acrylat, ethoxyliertes Trimethylolpropantri(meth)acrylat, Triethylenglykoldi(meth)acrylat, Ethylenglykoldi(meth)acrylat, Tetraethylenglykoldimethacrylat, Polyethylenglykol-600-di(meth)acrylat, 1,4-Butandioldi(meth)acrylat, Glycerindimethacrylat, Pentaerythritdi(meth)acrylat, Aminoplast(meth)acrylate; acrylierte Öle, wie Leinöl, Sojaöl und Castoröl, (Meth)acrylamide, Maleimide, Vinylacetat, Vinylcaprolactam, Polythiole sowie Vinylether. Unter der Bezeichnung (Meth)acrylat soll dabei Acrylat und/oder Methacrylat verstanden werden.

Die in der Grundfarbe verwendeten Oligomeren bzw. Präpolymeren sind insbesondere Harze mit Acrylatfunktionalität, wie Epoxyacrylate, Polyurethanacrylate und Polyesteracrylate, (meth)acrylierte Epoxyharze, (meth)acrylierte Polyester, (meth)acrylierte Urethane/Polyurethane, (meth)acrylierte Polyether, (meth)acrylierte Polybutadiene, aromatische Säure(meth)acrylate, (meth)acrylierte Acryloligomere oder auch Polymere aus Diisocyanatohexan mit Hydroxyalkylestern der Propionsäure.

Die radikalisch härtende Grundfarbe weist eine Viskosität von 0,2 bis 0,7 Pa.s, bevorzugt von etwa 0,3 Pa.s, auf.

Die radikalisch UV-härtende Druckfarbe umfaßt Monomere, Oligomere und/oder Präpolymere sowie Farbpigmente und mindestens einen Photoinitator. Die radikalisch UV-härtende Druckfarbe hat eine Viskosität von 1,0 bis 3,0 Pa.s, bevorzugt von 1,5 bis 2,5 Pa·s.

Gegenstand der Erfindung ist ferner eine mit radikalisch härtbaren Druckfarben bedruckte ein- oder mehrschichtige Folie auf Basis von (Co-)Polyamid oder mit einer Außenschicht auf Basis von (Co-)Polyamid, die dadurch gekennzeichnet ist, daß die Druckfarbe aufgedruckt ist auf eine Schicht aus einer radikalisch härtenden Grundfarbe, die in ein und demselben Molekül
a) mindestens eine Gruppe enthält, die eine Bindung mit der (Co-)Polyamid-Oberfläche eingehen kann, insbesondere durch eine (Poly)Kondensationsreaktion, und
b) mindestens eine ethylenisch ungesättigte Gruppe, die eine radikalisch initiierte Polyadditionsreaktion eingehen kann.

Unter der Bezeichnung (Co-)Polyamid soll im Zusammenhang mit der vorliegenden Erfindung Polyamid, Copolyamid, Blockcopolymere mit Blöcken aus Polyamiden und/oder Copolyamiden sowie beliebige Mischungen davon verstanden werden. Die reaktive Verbindung in der Grundfarbe bildet vorzugsweise kovalente Bindungen zu der (Co-)Polyamid-Oberfläche.

Die Grundfarbe wird sehr dünn auf die (Co-)Polyamid enthaltende Oberfläche aufgebracht. Bevorzugt beträgt das Schichtgewicht höchstens 2,0 g/m², besonders bevorzugt 1,0 g/m² oder weniger. Dafür muß die Grundfarbe eine relativ geringe Viskosität aufweisen. Sie beträgt bevorzugt 0,2 bis 0,7 Pa.s, besonders bevorzugt etwa 0,3 Pa·s. Die gewünschte Viskosität läßt sich durch Zumischen von ReaktivVerdünnern, beispielsweise niederviskosen Monomeren mit radikalisch polymerisierbaren olefinischen Doppelbindungen, wie Tripropylenglykoldiacrylat (TPGDA), Dipropylenglykoldiacrylat (DPGDA), Hexandioldiacrylat (HDDA) oder Trimethylolpropantriacrylat (TMPTA), erreichen. Die Viskosität kann prinzipiell auch durch Zumischen eines (nicht-reaktiven) organischen Lösungsmittels herabgesetzt werden. Dann ist jedoch ein zusätzlicher Trockenschritt notwendig und das Auftragen der Grundfarbe kann nicht mehr in einem In-line-Verfahren durchgeführt werden. Lösungsmittelfreie Grundfarben sind daher bevorzugt. In jedem Fall ist die Grundfarbe, wie auch die Druckfarbe, wasserfrei.

Die Grundfarbschicht ist praktisch farblos. Um die Druckqualität zu kontrollieren, enthält die Grundfarbe deshalb zweckmäßig noch eine für das bloße Auge nicht sichtbare Markierungssubstanz, beispielsweise ein Lumineszenz-Pigment.

Allgemein wird die Grundfarbe vollflächig aufgetragen. Es ist prinzipiell jedoch auch möglich, die Grundfarbe bildmäßig aufzutragen, d.h. nur in den Bereichen, die anschließend mit der radikalisch härtbaren Farbe bedruckt werden sollen.

Die Grundfarbe enthält darüber hinaus wenigstens einen Photoinitiator, der eine radikalische Polymerisation von ethylenisch ungesättigten Monomeren initiieren kann. Solche Initiatoren sind allgemein bekannt. Dazu gehören beispielsweise Methyl-ethyl-keton, Acetophenon, Dialkoxyacetophenone, Benzaldehyd, Benzophenon, 4-Amino-benzophenon, Benzoinalkylether, Dibenzosuberon, Fluoren-9-on, Indan-1-on und Thioxanthen-9-on, α-Aminoalkylphenone, auch mit polymerem Aufbau, Alkylbenzoyl-aryl-phosphinoxide, Hydroxyalkyl-aryl-ketone, polymere Benzophenonderivate und polymere Aminobenzoatderivate. Die Photoinitiatoren sollen einen geringen Dampfdruck aufweisen, bei Bestrahlung keine unerwünschten Nebenprodukte bilden und die gehärtete Grundfarbschicht nicht verfärben. Die Wirkung der Photoinitiatoren kann durch Coinitiatoren verstärkt werden. Der Anteil aller Initiatoren (einschließlich der Coinitiatoren) beträgt zweckmäßig bis zu 10 Gew.-%, bezogen auf das Gewicht der Monomere.

Die Bestrahlung erfolgt allgemein mit UV-Strahlung, prinzipiell einsetzbar sind jedoch auch Elektronenstrahlen. Um eine ausreichende Vernetzung zu erreichen, genügt allgemein eine Bestrahlungsdauer von weniger als 2 sec, bevorzugt weniger als 1 sec.

Möglichst unmittelbar nach dem Bestrahlen wird die radikalisch härtbare Farbe aufgedruckt. In mehreren Druckstationen (allgemein 3 bis 6) werden in der Regel verschiedenfarbige radikalisch härtbare Farben verdruckt. Die radikalisch härtbaren Farben sind zweckmäßig lösungsmittelfrei. Ein mit radikalisch härtbarer Druckfarbe hergestellter Druck weist einen deutlich geringeren Geruch auf als ein mit kationisch härtbarer Druckfarbe hergestellter.

Auf keinen Fall darf die Grundfarbe mit der Druckfarbe vermischt und erst dann bestrahlt werden. Damit ließen sich die der Erfindung zugrunde liegenden Aufgaben nicht lösen. Der Druck wäre dann nicht mehr ausreichend auf der Oberfläche der Hülle verankert. Die Druckfarbe sollte möglichst schnell, d.h. möglichst innerhalb von Sekunden oder Minuten, nach dem Bestrahlen der Grundfarbschicht aufgebracht werden. Dann wird eine besonders gute Haftung des Drucks auf der Grundfarbschicht erreicht. Es wird vermutet, daß die Grundfarbschicht dann noch Radikale enthält, die auch mit polymerisierbaren, olefinisch ungesättigten Verbindungen in der Druckfarbe reagieren können. Wird die Druckfarbe dagegen erst nach einiger Zeit, d.h. beispielsweise nach einigen Tagen, aufgebracht, dann ist die Haftung des Drucks auf der Grundfarbschicht unzureichend.

Die radikalisch härtbare Druckfarbe enthält, ebenso wie die Grundfarbe, mindestens einen Photoinitiator. Die Photoinitiatoren in der Druckfarbe können mit denen in der Grundfarbe identisch oder verschieden voneinander sein. Der Photoinitiator in der Druckfarbe muß in der Lage sein, Radikale zu bilden, die eine Polyaddition von Monomeren mit ethylenisch ungesättigten Bindungen initiieren.

Die radikalisch UV-härtende Druckfarbe enthält Monomere, Oligomere und/oder Präpolymere, die jeweils polymerisierbare olefinische Doppelbindungen aufweisen, Photoinitatoren, Farbstoffen oder -pigmenten, gegebenenfalls auch Bindemittel. Bevorzugt ist die lösungsmittelfrei. Sie weist zweckmäßig eine Viskosität von 1,0 bis 3,0 Pa.s, bevorzugt von 1,5 bis 2,5 Pa.s, auf.

Die bedruckte Folie ist in einer besonderen Ausführungsform eine schlauchförmige Folie, speziell eine nahtlose schlauchförmige Folie. Die schlauchförmige Folie dient insbesondere als Nahrungsmittelhülle, speziell als künstliche Wursthülle.

Gegenstand der Erfindung ist demgemäß auch ein Verfahren zur Herstellung der bedruckten Folie, umfassend die Schritte:
(a) Bereitstellen einer ein oder mehrschichtigen Folie, deren zu bedruckende Oberfläche im wesentlichen aus (Co-)Polyamiden besteht;
(b) gegebenenfalls Vorbehandeln der Oberfläche der Folie durch Coronaentladung;
(c) Bedrucken der Oberfläche der Folie mit einer radikalisch härtenden dual-cure Grundfarbe;
(d) Härten der Grundfarbe mittels UV-Licht und/oder Elektronenstrahl, wobei eine gehärtete Grundfarbschicht gebildet wird;
(e) Bedrucken mit einer radikalisch UV-härtenden Druckfarbe;
(f) Härten der Druckfarbe durch Bestrahlung mit UV-Licht, wobei ein gehärteter Druck gebildet wird, und
(g) gegebenenfalls ein- oder mehrmalige Wiederholung der Schritte (e) und (f).

Die Folie ist vorzugsweise schlauchförmig, insbesondere nahtlos schlauchförmig. Sie wird allgemein in einem Flexodruckverfahren bedruckt, wobei die Druckgeschwindigkeit größer als 100 m/min, bevorzugt größer als 120 m/min und besonders bevorzugt größer als 140 m/min sein kann.

Bekanntlich nehmen die verschiedenen Polyamide bzw. Copolyamide bis zu 10 Gew.-% ihres Gewichts an Wasser auf. Vor dem Bedrucken nach dem erfindungsgemäßen Verfahren muß die (Co-)Polyamid-Oberfläche nicht vorgetrocknet werden. Das in der Folie bzw. Folienschicht auf Basis von (Co-)Polyamiden allgemein enthaltene Wasser hat sich sogar als vorteilhaft für die Zwecke der vorliegenden Erfindung erwiesen.

Die Grundfarbschicht und die Farbschichten sind beständig gegen Einwirkung von Eis, Wasser und Wasserdampf mit Temperaturen von -20 bis + 115 °C. Die Gesamtmigration der bedruckten Hülle wird durch Extrahieren mit Wasser nach der Europäischen Norm EN 1186-5 bzw. mit Olivenöl gemäß EN 1186-4 nach den Europäischen Migrations-Richtlinien 97/48/EG und 85/572/EWG bestimmt (Prüfbedingungen: 4 h/100 °C, anschließend 10 Tage lang bei 40 °C). Die Extraktion erfolgt dabei nur auf der Innenseite. Dabei wurde gefunden, daß sich unter diesen Bedingungen weniger als 10 mg pro dm² der bedruckten Folie extrahieren lassen und die vorgeschriebenen Grenzwerte damit nicht überschritten sind.

Die erfindungsgemäße bedruckte Folie kann auch schlauchförmig sein. Sie eignet sich dann als Nahrungsmittelhülle, insbesondere als künstliche Wursthülle. Wursthüllen zeigen allgemein beim Erwärmen in Wasser von etwa 80 °C allgemein einen Schrumpf von weniger als 20 % in Längs- und Querrichtung. Bei der erfindungsgemäßen Folie löst sich der Druck auch bei einer solchen thermischen Schrumpfung nicht ab, was bei bekannten Hüllen ein Problem darstellt.

## Patentansprüche

1. Druckfarbensystem zum Bedrucken von Folien mit einer druckseitigen Oberfläche auf Basis von (Co-)Polyamid mit einer radikalisch härtenden Grundfarbe und mindestens einer radikalisch UV-härtenden Druckfarbe, wobei die Grundfarbe eine reaktive Verbindung umfaßt, die in ein und demselben Molekül
a) mindestens eine Gruppe enthält, die eine Bindung mit der (Co-)Polyamid-Oberfläche eingehen kann; und
b) mindestens eine ethylenisch ungesättigte Gruppe, die eine radikalisch initiierte Polyadditionsreaktion eingehen kann.

2. Druckfarbensystem gemäß Anspruch 1, **dadurch gekennzeichnet, daß** die reaktive Verbindung ein Monomer, Oligomer und/oder Präpolymer ist.

3. Druckfarbensystem gemäß Anspruch 1 oder 2, **dadurch gekennzeichnet, daß** die Gruppe, die eine Bindung mit der (Co-)Polyamid-Oberfläche eingehen kann, eine Isocyanat-Gruppe ist und/oder daß die ethylenisch ungesättigte Gruppe eine (Meth)acrylatgruppe ist.

4. Druckfarbensystem gemäß Anspruch 1 oder 2, **dadurch gekennzeichnet, daß** die Grundfarbe zusätzlich einen Reaktiv-Verdünner umfaßt, bevorzugt ein niederviskoses Monomer mit radikalisch polymerisierbaren olefinischen Doppelbindungen, speziell Tripropylenglykol-di(meth)acrylat, Dipropylenglykoldi(meth)acrylat, Hexandioldi(meth)acrylat oder Trimethylolpropantri(meth)acrylat.

5. Druckfarbensystem gemäß Anspruch 1 oder 2, **dadurch gekennzeichnet, daß** die radikalisch UV-härtende Druckfarbe Monomere, Oligomere und/oder Präpolymere sowie Farbpigmente und mindestens einen Photoinitator umfaßt.

6. Druckfarbensystem gemäß Anspruch 1 oder 2, **dadurch gekennzeichnet, daß** die radikalisch härtende Grundfarbe eine Viskosität von 0,2 bis 0,7 Pa·s, bevorzugt von etwa 0,3 Pa·s, und/oder die radikalisch UV-härtende Druckfarbe eine Viskosität von 1,0 bis 3,0 Pa.s, bevorzugt von 1,5 bis 2,5 Pa·s, aufweist.

7. Mit einer radikalisch härtbaren Druckfarbe bedruckte ein- oder mehrschichtige Folie auf Basis von (Co-)Polyamid oder mit einer Außenschicht auf Basis von (Co-)Polyamid, **dadurch gekennzeichnet, daß** die Druckfarbe auf eine Schicht aus einer radikalisch härtenden Grundfarbe gedruckt wird, wobei die Grundfarbe eine reaktive Verbindung umfaßt, die in ein und demselben Molekül
a) mindestens eine Gruppe enthält, die eine Bindung mit der (Co-)Polyamid-Oberfläche eingehen kann und
b) mindestens eine ethylenisch ungesättigte Gruppe, die eine radikalisch initiierte Polyadditionsreaktion eingehen kann.

8. Bedruckte Folie gemäß Anspruch 7, **dadurch gekennzeichnet, daß** die reaktive Verbindung ein Monomer, Oligomer und/oder Präpolymer ist.

9. Bedruckte Folie gemäß Anspruch 7 oder 8, **dadurch gekennzeichnet, daß** die Gruppe, die eine Bindung mit der (Co-)Polyamid-Oberfläche eingehen kann, eine Isocyanat-Gruppe ist und/oder daß die ethylenisch ungesättigte Gruppe eine (Meth)acrylatgruppe ist.

10. Bedruckte Folie gemäß Anspruch 7 oder 8, **dadurch gekennzeichnet, daß** die radikalisch UV-härtende Druckfarbe Monomere, Oligomere und/oder Präpolymere sowie Farbpigmente und mindestens einen Photoinitator umfaßt.

11. Bedruckte Folie gemäß einem oder mehreren der Ansprüche 7 bis 10, **dadurch gekennzeichnet, daß** sie schlauchförmig ist, bevorzugt nahtlos, wobei sie insbesondere eine Nahrungsmittelhülle, bevorzugt eine künstliche Wursthülle, ist, deren Grundfarbschicht und deren Farbschicht(en) vorzugsweise beständig sind gegen Einwirkung von Eis, Wasser und Wasserdampf mit Temperaturen von -20 bis 115 °C und/oder beständig sind gegen thermische Schrumpfung der Folie in Längs- und/oder Querrichtung von jeweils bis zu 20 %, wobei vorzugsweise die Gesamtmigration der bedruckte Folie, bestimmt gemäß EN 1186-5 mit Wasser als Simulationsflüssigkeit und gemäß EN 1186-4 mit Olivenöl als Simulationsflüssigkeit, an der Innenseite der bedruckten Hülle nach einer Einwirkdauer von 4 Stunden bei 100 °C und 10 Tagen bei 40 °C gemessene Gesamtmigration weniger als 10 mg/dm² beträgt.

12. Verfahren zur Herstellung einer bedruckten Folie, umfassend die Schritte:
(a) Bereitstellen einer ein- oder mehrschichtigen Folie mit einer Oberfläche auf Basis von (Co-)Polyamid,
(b) gegebenenfalls Vorbehandeln der Oberfläche durch Corona-Entladung;
(c) Bedrucken der Folie mit einer radikalisch härtenden Grundfarbe, der eine Verbindung mit mindestens einer Gruppe, die eine Bindung mit der (Co-)Polyamid-Oberfläche eingehen kann und mindestens eine ethylenisch ungesättigte Gruppe, die eine radikalisch initiierte Polyadditionsreaktion eingehen kann, sowie mindestens einen Photoinitiator umfaßt;
(d) Härten der Grundfarbe unter der Einwirkung von UV-Licht und/oder Elektronenstrahlen, wobei eine gehärtete Grundfarbschicht gebildet wird;
(e) Bedrucken mit einer radikalisch härtenden Druckfarbe;
(f) Härten der Druckfarbe unter der Einwirkung von UV-Strahlung, wobei ein gehärteter Druck gebildet wird, und
(g) gegebenenfalls ein- oder mehrfache Wiederholung der Schritte (e) und (f).

13. Verfahren gemäß Anspruch 12, **dadurch gekennzeichnet, daß** eine Grundfarbe eingesetzt wird, die mindestens einen Reaktiv-Verdünner umfaßt, wobei als Reaktiv-Verdünner bevorzugt niederviskose Monomere mit radikalisch polymerisierbaren olefinischen Doppelbindungen, bevorzugt Tripropylenglykoldiacrylat, Dipropylenglykol-diacrylat, Hexandioldiacrylat oder Trimethylolpropantriacrylat, eingesetzt werden.

14. Verfahren gemäß Anspruch 12, **dadurch gekennzeichnet, daß** darin eine Grundfarbe mit einer Viskosität von 0,2 bis 0,7 Pa.s, bevorzugt von etwa 0,3 Pa·s, und/oder eine radikalisch härtende Druckfarbe mit einer Viskosität von 1,0 bis 3,0 Pa·s, bevorzugt von 1,5 bis 2,5 Pa·s, eingesetzt wird, wobei die Grundfarbe bevorzugt mit einem Schichtgewicht von höchstens 2 g/m², bevorzugt höchstens 1 g/m², auf die Folie aufgebracht wird.

15. Verfahren gemäß Anspruch 12, **dadurch gekennzeichnet, daß** die Folie im Flexodruck bedruckt wird und/oder daß die Druckgeschwindigkeit größer als 100 m/min, bevorzugt größer als 120 m/min und besonders bevorzugt größer als 140 m/min ist.

16. Verfahren gemäß Anspruch 12, **dadurch gekennzeichnet, daß** eine schlauchförmige, vorzugsweise nahtlose, Folie bedruckt wird.

## Claims

1. A printing ink system for printing on films having a print-side surface based on (co)polyamide with a base ink curing by a free radical mechanism and at least one UV-curing printing ink curing by a free radical mechanism, the base ink comprising a reactive compound which, in one and the same molecule,
a) contains at least one group which can form a bond with the (co)polyamide surface; and
b) at least one ethylenically unsaturated group which can undergo a free radical polyaddition reaction.

2. The printing ink system as claimed in claim 1, wherein the reactive compound is a monomer, oligomer and/or prepolymer.

3. The printing ink system as claimed in claim 1 or 2, wherein the group which can form a bond with the (co)polyamide surface is an isocyanate group and/or wherein the ethylenically unsaturated group is a (meth)acrylate group.

4. The printing ink system as claimed in claim 1 or 2, wherein the base ink additionally comprises a reactive diluent, preferably a low-viscosity monomer having olefinic double bonds capable of free radical polymerization, preferably tripropylene glycol di(meth)acrylate, dipropylene glycol di(meth)acrylate, hexanediol di(meth)acrylate or trimethylolpropane tri(meth)acrylate.

5. The printing ink system as claimed in claim 1 or 2, wherein the UV-curing printing ink curing by a free radical mechanism comprises monomers, oligomers and/or prepolymers and colored pigments and at least one photoinitiator.

6. The printing ink system as claimed in claim 1 or 2, wherein the base ink curing by a free radical mechanism has a viscosity of from 0.2 to 0.7 Pa·s, preferably of about 0.3 Pa·s, and/or wherein the UV-curing printing ink curing by a free radical mechanism has a viscosity of from 1.0 to 3.0 Pa·s, preferably from 1.5 to 2.5 Pa·s.

7. A mono-layered or multi-layered film which is printed with a printing ink curable by a free radical mechanism and is based on (co)polyamide or has an outer layer based on (co)polyamide, wherein the printing ink is printed on a layer of a base ink curing by a free radical mechanism, the base ink comprising a reactive compound which, in one and the same molecule,
a) contains at least one group which can form a bond with the (co)polyamide surface and
b) at least one ethylenically unsaturated group which can undergo a free radical polyaddition reaction.

8. The imprinted film as claimed in claim 7, wherein the reactive compound is a monomer, oligomer and/or prepolymer.

9. The imprinted film as claimed in claim 7 or 8, wherein the group which can form a bond with the (co)polyamide surface is an isocyanate group and/or wherein the ethylenically unsaturated group is a (meth)acrylate group.

10. The imprinted film as claimed in claim 7 or 8, wherein the UV-curing printing ink curing by a free radical mechanism comprises monomers, oligomers and/or prepolymers and colored pigments and at least one photoinitiator.

11. The imprinted film as claimed in one or more of claims 7 to 10, which is tubular, preferably seamless, the film preferably being a food casing, preferably a synthetic sausage casing, the base ink coat and the ink coat(s) preferably being resistant to the action of ice, water and steam at temperatures of from -20 to 115°C and/or being resistant to thermal shrinkage of the film in the longitudinal and/or transverse directions of in each case up to 20%, wherein the total migration, measured according to EN 1186-5 with water as simulation liquid and according to EN 1186-4 with olive oil as simulation liquid on the inside of the imprinted casing after a duration of action of 4 hours at 100°C and 10 days at 40°C, is preferably less than 10 mg/dm².

12. A process for the production of an imprinted film, comprising the steps:
(a) provision of a mono-layered or multi-layered film having a surface based on (co)polyamide,
(b) optionally pretreatment of the surface by corona discharge;
(c) imprinting of the film with a base ink which cures by a free radical mechanism and comprises a compound having at least one group which can form a bond with the (co)polyamide surface and at least one ethylenically unsaturated group which can undergo a free radical polyaddition reaction, and at least one photoinitiator;
(d) curing of the base ink under the action of UV light and/or electron beams, a cured base ink coat being formed;
(e) imprinting with a printing ink curing by a free radical mechanism;
(f) curing of the printing ink under the action of UV radiation, a cured print being formed; and
(g) optionally one or more repetitions of the steps (e) and (f).

13. The process as claimed in claim 12, wherein a base ink which comprises at least one reactive diluent is used, wherein as reactive diluent preferably low-viscosity monomers having olefinic double bonds capable of free radical polymerization, preferably tripropylene glycol diacrylate, dipropylene glycol diacrylate, hexanediol diacrylate or trimethylolpropane triacrylate, are used.

14. The process as claimed in claim 12, wherein a base ink having a viscosity of from 0.2 to 0.7 Pa·s, preferably of about 0.3 Pa·s, is used therein, and/or a printing ink curing by a free radical mechanism and having a viscosity of from 1.0 to 3.0 Pa·s, preferably from 1.5 to 2.5 Pa·s, is used, wherein the base ink is applied with a coat weight of not more than 2 g/m², preferably not more than 1 g/m², to the film.

15. The process as claimed in claim 12, wherein the film is imprinted by flexographic printing and/or wherein the printing speed is greater than 100 m/min, preferably greater than 120 m/min and particularly preferably greater than 140 m/min.

16. The process as claimed in claim 12, wherein a tubular, preferably seamless, film is imprinted.

## Revendications

1. Système de couleurs d'impression pour imprimer des feuilles comportant une surface du côté d'impression à base de (co-)polyamide avec une couleur de base à durcissement radicalaire et au moins une couleur d'impression durcissant à durcissement radicalaire aux UV, la couleur de base comprenant un composé réactif qui contient dans une et même molécule
a) au moins un groupe qui peut constituer une liaison avec la surface de (co-)polyamide ; et
b) au moins un groupe éthyléniquement insaturé qui peut constituer une réaction de poly-addition initiée au niveau radicalaire.

2. Système de couleurs d'impression selon la revendication 1, **caractérisé en ce que** le composé réactif est un monomère, un oligomère et/ou un prépolymère.

3. Système de couleurs d'impression selon la revendication 1 ou 2, **caractérisé en ce que** le groupe qui peut constituer une liaison avec la surface de (co-)polyamide est un groupe isocyanate et/ou que le groupe éthyléniquement insaturé est un groupe (méth)acrylate.

4. Système de couleurs d'impression selon la revendication 1 ou 2, **caractérisé en ce que** la couleur de base comprend en outre un diluant réactif, de préférence, un monomère à faible viscosité, comportant des doubles liaisons oléfiniques polymérisables au niveau radicalaire, spécifiquement, le tripropylène glycol - di(méth)acrylate, le dipropylène glycol - di(méth)acrylate, l'hexanedioldi(méth)acrylate ou le triméthylolpropane-tri(méth)acrylate.

5. Système de couleurs d'impression selon la revendication 1 ou 2, **caractérisé en ce que** la couleur d'impression à durcissement radicalaire par UV comprend des monomères, des oligomères et/ou des prépolymères et des pigments colorés et au moins, un photo-initiateur.

6. Système de couleurs d'impression selon la revendication 1 ou 2, **caractérisé en ce que** la couleur de base à durcissement radicalaire présente une viscosité de 0,2 à 0,7 Pa.s, de préférence, d'environ 0,3 Pa.s et/ou la couleur d'impression à durcissement radicalaire par UV présente une viscosité de 1,0 à 3,0 Pa.s, de préférence, de 1,5 à 2,5 Pa.s.

7. Feuille mono- ou multicouche imprimée avec une couleur d'impression à durcissement radicalaire à base de (co-)polyamide ou comportant une couche externe à base de (co-)polyamide, **caractérisée en ce que** la couleur d'impression est imprimée sur une couche de base à durcissement radicalaire, la couleur de base comprenant un composé réactif, qui contient dans une et même molécule
a) au moins un groupe qui peut constituer une liaison avec la surface de (co-)polyamide ; et
b) au moins un groupe éthyléniquement insaturé qui peut constituer une réaction de poly-addition initiée au niveau radicalaire.

8. Feuille imprimée selon la revendication 7, **caractérisée en ce que** le composé réactif est un monomère, un oligomère et/ou un prépolymère.

9. Feuille imprimée selon la revendication 7 ou 8, **caractérisée en ce que** le groupe qui peut constituer une liaison avec la surface de (co-)polyamide est un groupe isocyanate et/ou que le groupe éthyléniquement insaturé est un groupe (méth)acrylate.

10. Feuille imprimée selon la revendication 7 ou 8, **caractérisée en ce que** la couleur d'impression à durcissement radicalaire par UV comprend des monomères, des oligomères et/ou des prépolymères et des pigments colorés et au moins, un photo-initiateur.

11. Feuille imprimée selon une ou plusieurs des revendications 7 à 10, **caractérisée en ce qu'**elle est de forme tubulaire, de préférence, sans couture, en particulier, **en ce qu'**elle est une enveloppe alimentaire, de préférence, une enveloppe artificielle de saucisse dont la couche colorée de base et la/les couche(s) colorée(s) résistent de préférence à l'effet de la glace, de l'eau et de la vapeur d'eau, à des températures de -20 à 115° C et/ou résistent au rétrécissement thermique de la feuille dans le sens longitudinal et/ou dans le sens perpendiculaire allant respectivement jusqu'à 20 %, de préférence, la migration totale de la feuille imprimée, déterminée selon la norme EN 1186-5 avec de l'eau comme liquide de simulation et selon la norme EN 1186-4 avec de l'huile d'olive comme liquide de simulation, mesurée du côté intérieur de l'enveloppe imprimée après une durée d'effet de 4 heures à 100° C et de 10 jours à 40° C étant inférieure à 10 mg/dm².

12. Procédé de production d'une feuille imprimée, comprenant les étapes consistant à :
(a) mettre à disposition une feuille mono- ou multicouche comportant une surface à base de (co-)polyamide,
(b) éventuellement, prétraiter la surface par décharge corona ;
(c) imprimer la feuille avec une couleur de base à durcissement radicalaire qui comprend un composé comportant au moins un groupe qui constitue une liaison avec la surface de (co-)polyamide et au moins un groupe éthyléniquement insaturé qui peut constituer une réaction de poly-addition initiée au niveau radicalaire, et au moins un photo-initiateur ;
(d) durcir la couleur de base sous l'effet de la lumière UV et/ou de faisceaux d'électrons, une couche de couleur de base durcie étant formée ;
(e) imprimer avec une couleur d'impression à durcissement radicalaire ;
(f) durcir la couleur d'impression sous l'effet du rayonnement UV, une impression durcie étant formée, et
(g) répéter éventuellement une ou plusieurs fois les étapes (e) et (f).

13. Procédé selon la revendication 12, **caractérisé en ce qu'**une couleur de base est utilisée, qui comprend au moins un diluant réactif, des monomères à faible viscosité comportant des doubles liaisons oléfiniques polymérisables au niveau radicalaire, de préférence le tripropylène glycol - diacrylate, le dipropylène glycol - diacrylate, l'hexanediol-diacrylate ou le triméthylolpropane-triacrylate étant utilisés de préférence comme diluants réactifs.

14. Procédé selon la revendication 12, **caractérisé en ce que**, dans celui-ci, une couleur de base présentant une viscosité de 0,2 à 0,7 Pa.s, de préférence, d'environ 0,3 Pa.s et/ou une couleur d'impression à durcissement radicalaire présente une viscosité de 1,0 à 3,0 Pa.s, de préférence, de 1,5 à 2,5 Pa.s est utilisée, la couleur de base étant appliquée de préférence avec un poids de revêtement maximal de 2 g/m², de préférence, au maximum de 1 g/m² sur la feuille.

15. Procédé selon la revendication 12, **caractérisé en ce que** la feuille est imprimée en flexographie et/ou **en ce que** la vitesse d'impression est supérieure à 100 m/min, de préférence, supérieure à 120 m/min et de manière davantage préférée, supérieure à 140 m/min.

16. Procédé selon la revendication 12, **caractérisé en ce qu'**une feuille de forme tubulaire, de préférence sans couture, est imprimée.
